## Europäisches Patentamt

## European Patent Office

## Office européen des brevets

(11) Veröffentlichungsnummer: **0 452 830 A2**

# EUROPÄISCHE PATENTANMELDUNG

(21) Anmeldenummer: **91105895.6**

(22) Anmeldetag: **11.04.91**

(51) Int. Cl.5: **C08G 61/00, C08G 65/40,** **C08J 5/18**

(30) Priorität: **20.04.90 DE 4012589**

(43) Veröffentlichungstag der Anmeldung: **23.10.91 Patentblatt 91/43**

(84) Benannte Vertragsstaaten: **AT CH DE FR GB IT LI NL**

(71) Anmelder: **HOECHST AKTIENGESELLSCHAFT** **Postfach 80 03 20** **W-6230 Frankfurt am Main 80(DE)**

(72) Erfinder: **Bennett, Cynthia, Dr.** **Mainstrasse 22** **W-6200 Wiesbaden(DE)** Erfinder: **Roth, Werner, Dr.** **Kreuzheck 2** **W-6239 Eppstein-Niederjosbach(DE)**

(54) **Thermoplastisch weiterverarbeitbare Folie aus aromatischem Polyetherketon.**

(57) Es wird eine Folie aus thermoplastischem, vollaromatischem Polyetherketon beschrieben. Sie ist amorph und besteht im wesentlichen aus dem Polymeren PEEKK, das aus folgendem ständig wiederkehrenden Baustein aufgebaut ist:

-[-Ph-O-Ph-O-Ph-CO-Ph-CO-]-.

Dabei soll die Gruppe Ph eine para-Phenylengruppe bedeuten.

EP 0 452 830 A2

Die vorliegende Erfindung betrifft eine Folie aus thermoplastischem, vollaromatischem Polyetherketon.

Vollaromatische para-verknüpfte Polyetherketone sind bereits als besonders temperaturbeständige teilkristalline Polymerwerkstoffe bekannt. Sie können entweder über eine Friedel-Crafts-Acylierung von aromatischen Ethern (US-A-3 065 205) oder durch eine nukleophile Kondensation von Phenolaten mit aromatischen Halogenverbindungen (DE-A-22 20 079) hergestellt werden.

Die Stoffklasse der Polyetherketone zeichnet sich insbesondere durch ihre außerordentlich hohe Wärmebeständigkeit in Kombination mit zufriedenstellender thermoplastischer Verarbeitbarkeit aus. Darüber hinaus besitzen die Polyetherketone im allgemeinen eine exzellente Beständigkeit gegenüber der Einwirkung von Chemikalien und gegen Hydrolyse. Ihre mechanische Festigkeit und Zähigkeit sowie ihre Dimensionsbeständigkeit sind ebenfalls ausgezeichnet. Aus diesen Gründen zählen aromatische Polyetherketone zu den von Fachleuten besonders geschätzten Werkstoffen in der Technik.

Als Nomenklatur für die Substanzklasse der Polyetherketone hat sich folgendes System eingebürgert:

P    bezeichnet ein Polymer

E    bezeichnet eine para-Phenoxy-Einheit

K    bezeichnet eine para-Phenylketo-Einheit

Nach diesem System bedeutet das Kürzel PEEK also ein Polymeres mit immer wiederkehrenden Einheiten folgender Formel:

-[-Ph-O-Ph-O-Ph-CO-]-,

in der die Gruppe Ph eine para-Phenylengruppe darstellt.

Wärmebeständige Folien aus dem Polymeren PEEK sind bereits aus der Research Disclosure 21601 von 1982 bekannt, allerdings hauptsächlich in orientierter, kristalliner Form. Die Research Disclosure 20216 von 1981, die biaxial orientierte und fixierte Folien aus PEEK behandelt, erwähnt auch andere polyetherketon-Werkstoffe wie z. B. PEK, PEEKK und PEKEKK, jedoch werden Folien aus diesen Polymeren nicht beschrieben.

Die bekannten orientierten, kristallinen Folien aus aromatischem Polyetherketon haben den Nachteil, daß ihre thermoplastische Weiterverarbeitbarkeit durch die Orientierung und die hohe Kristallinität des Polymeren stark eingeschränkt ist.

Aus dem Polymeren PEEK sind allerdings auch nicht orientierte, amorphe Folien beschrieben worden (vgl. das Datenblatt der Firma ICI zu dem Polyetherketonfilm 'STABAR K', Dez. 1984). Diese Folien haben jedoch den Nachteil, daß bei deren Lagerung bei 160 °C vergleichsweise schnell eine Verhärtung oder Versprödung des Polymeren auftritt, ferner sind Änderungen der elektrischen und anderer Eigenschaften ab etwa 140 °C deutlich zu beobachten.

Aufgabe der vorliegenden Erfindung war es daher, eine Folie zu entwickeln, die sich besonders gut eignet, um in einem thermoplastischen Verformungsschritt weiterverarbeitet zu werden, die aber trotzdem bei Temperaturen bis zu 160 °C keine Tendenz zur Verhärtung oder Versprödung zeigt. Darüber hinaus soll sich die Folie auch durch gleichmäßigere Konstanz ihrer elektrischen und anderen Eigenschaften bis ca. 155 °C auszeichnen.

Gelöst wird diese Aufgabe durch eine Folie der eingangs genannten Gattung, deren Kennzeichenmerkmale darin zu sehen sind, daß sie amorph ist und daß sie im wesentlichen aus dem Polymeren PEEKK besteht, das aus folgendem ständig wiederkehrenden Baustein aufgebaut ist:

-[-Ph-O-Ph-O-Ph-CO-Ph-CO-]-,

wobei die Gruppe Ph eine para-Phenylengruppe bedeuten soll.

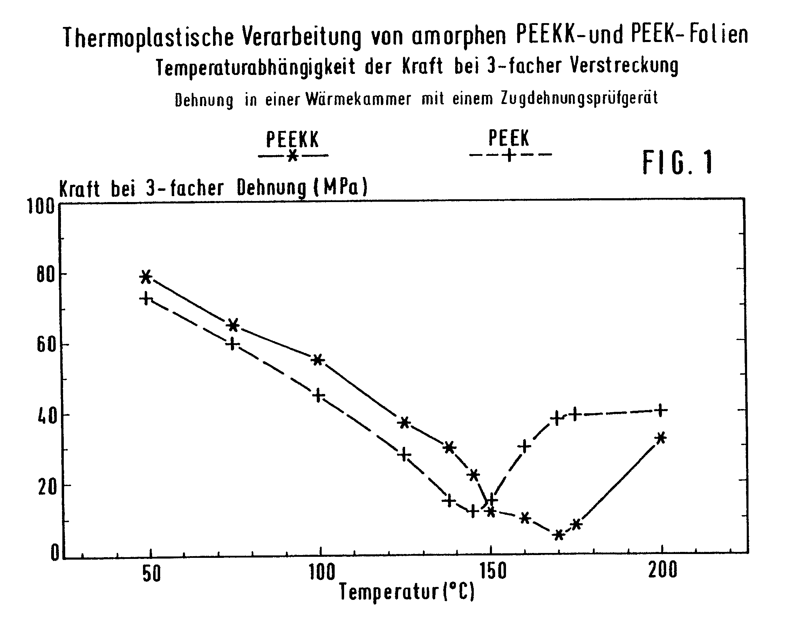

Das Merkmal amorph soll im Rahmen der Beschreibung der vorliegenden Erfindung bedeuten, daß die Folie im weitesten Sinne nach in der Kunststoffverarbeitung üblichen Techniken wie z. B. den Tiefziehen, dem Schweißen, dem Siegeln, dem Verpressen, dem Strecken, dem Prägen, dem Biegen usw. unter geeigneten Verfahrensbedingungen thermoplastisch zu wertvollen technischen weiterverarbeiteten Erzeugnissen veredelt werden kann. Das Merkmal soll zunächst durch die Abbildung 1 noch anschaulicher näher erläutert werden.

In der Abbildung 1 ist die Kraft, die notwendig ist, um eine Folie auf das Dreifache ihrer ursprünglichen Länge zu dehnen, gegen die Temperatur, bei der diese Dehnung vorgenommen wurde, graphisch aufgetragen. Es zeigt sich, daß bei Temperaturerhöhung die Festigkeit der erfindungsgemäßen Folie aus PEEKK in höherem Maße erhalten bleibt, d. h. bei einer gegebenen Temperatur bis 150 °C ist die Kraft, die aufgebracht werden muß, um die Folie zu verformen, stets höher als bei einer Folie aus PEEK. Trotzdem läßt sich die Folie aus PEEKK überraschenderweise leichter thermoplastisch verformen als eine Folie aus PEEK. Oberhalb einer Temperatur von ca. 145 °C steigt die Verformungskraft bei der Folie aus PEEK stark an. Bei der erfindungsgemäßen Folie aus PEEKK sinkt die Kraft aber bis zu einer Temperatur von 170 °C weiter ab, und es können insgesamt kleinere Verformungskräfte in einem größeren Temperaturintervall angewandt werden. Bei noch höheren Temperaturen steigt die Verformungskraft bei Folien aus PEEKK zwar auch wieder an, aber die Temperaturspanne, in der die Kraft niedrig ist, ist bei Folien aus PEEKK rund 20 °C breiter als bei Folien aus PEEK.

Es ist überraschend, daß die erfindungsgemäßen Folien aus PEEKK nicht nur erst bei höherer Temperatur zu Verhärtung oder Versprödung neigen, sondern daß sie insbesondere über ein größeres Temperaturintervall thermoplastisch weiterverarbeitbar sind (breiteres Verarbeitungsfenster). Darüber hinaus zeigen auch vor allem die elektrischen Eigenschaften der Folie eine bessere Konstanz bis ca. 155 °C, was aber auch für die Dimensionsstabilität und für die Festigkeit der Folien gilt.

Im folgenden werden diese Eigenschaften im einzelnen angesprochen.

Die erfindungsgemäße PEEKK-Folie muß weitgehend amorph sein, damit sie thermoplastisch weiterverarbeitet werden kann, denn wenn das Polymere kristallisiert, ist es nicht mehr so leicht verformbar. Es gibt mehrere Methoden, den Kristallinitätsgrad bei Polyetherketonen zu untersuchen. Die zuverlässigste Methode ist die Röntgenweitwinkelstreuung mit $CuK_\alpha$-Strahlung. Wird bei dieser Untersuchungsmethode statt scharfen Beugungsreflexen nur ein breites Maximum gefunden, so ist die Probe amorph. Als routinemäßige Untersuchungsmethode ist die Röntgenbeugung aber relativ aufwendig. Deshalb wird in der Praxis üblicherweise der Kristallinitätsgrad durch die Bestimmung der Dichte bestimmt. Bei PEEKK hat das amorphe Polymere eine Dichte im Bereich von 1,26 bis 1,27 g/cm³. Proben mit einer höheren Dichte sind kristallin, was außerdem optisch leicht erkennbar ist, denn kristalline, nicht orientierte Proben aus PEEKK erscheinen dem Auge, aufgrund von Lichtstreueffekten an den Kristalliten, opak. Weil aber auch geringe Mengen an anderen Zusatzstoffen leicht eine Opazität verursachen können, ist eine Dichte von < 1,28 g/cm³ als einfaches Prüfkriterium für den amorphen Zustand am besten geeignet.

Die durch thermoplastische Weiterverarbeitung der erfindungsgemäßen amorphen PEEKK-Folie hergestellten Formteile können als solche entweder amorph oder kristallin sein. Wenn ein Formteil beispielsweise weiterhin transparent sein soll, dann ist es vorteilhaft, wenn dieses Formteil den amorphen Zustand beibehält. Der amorphe Zustand wird dann weitgehend erhalten, wenn das Formteil nach seiner Formgestaltung und der hierfür notwendigen Erwärmung möglichst rasch wieder auf Raumtemperatur abgekühlt wird. Wenn aber andererseits ein Formteil mit besonders hoher Formbeständigkeit bei Temperaturen bis oberhalb von 160 °C geschaffen werden soll, dann ist eine kristalline Ausführungsform vorteilhaft. Den kristallinen Zustand erreicht man, wenn das Formteil nach dem Formgebungsschritt noch in der Form eine Zeit lang bei Temperaturen oberhalb etwa 170 °C gehalten wird. Weil dieses Formteil einer weiteren Verformung nicht mehr unterworfen werden soll, wirkt sich die bei kristallinen Folien beobachtete relative Verhärtung oder Versprödung bei einem solchen Formteil nicht nachteilig aus. Vorteilhafterweise wird durch die Kristallinität vielmehr eine höhere Anfangsfestigkeit bewirkt.

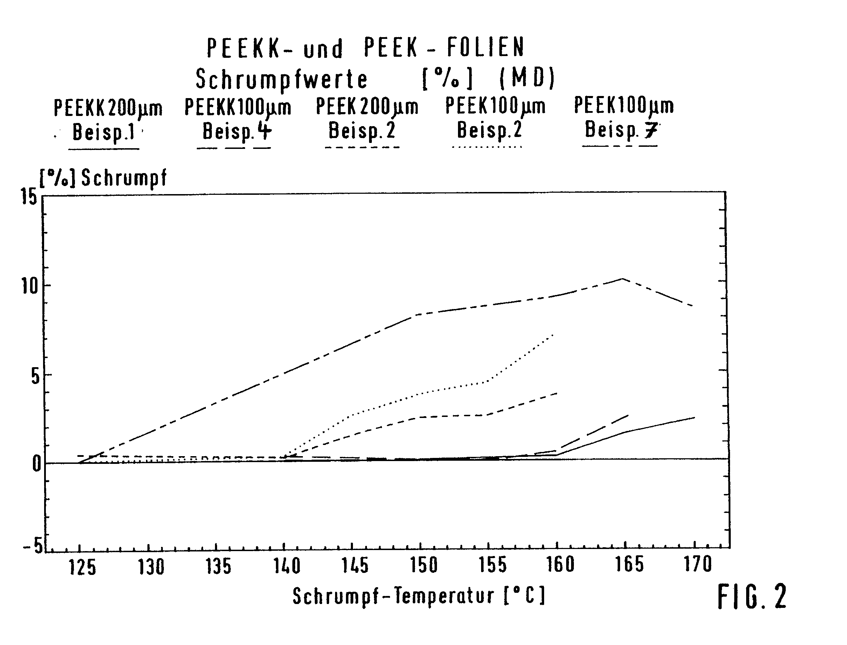

Die Dimensionsstabilität einer Folie wird gemessen, indem eine Folienprobe einer bestimmten Länge in einem Umluftofen spannungsfrei über eine Zeitspanne von 10 Minuten gehalten wird. Im allgemeinen gilt, daß jede thermoplastische Folie oberhalb einer bestimmten Temperatur nicht mehr maßhaltig ist. Erst wird sie weich und wellig und schrumpft schließlich. Dieser Schrumpf ist eine dauerhafte Dimensionsveränderung. Die Temperatur, bei der dieser Schrumpfungsprozess einsetzt, liegt bei Folien aus PEEKK deutlich höher (160 °C) als bei Folien aus PEEK (≦ 140 °C), genauere Werte ergeben sich aus den Beispielen und insbesondere aus der Abbildung 2.

Wie die Dimensionsstabilität bleiben auch die übrigen Eigenschaften der erfindungsgemäßen Folie aus PEEKK bis zu höheren Temperaturen erhalten als dies bei Folien aus PEEK der Fall ist. Beispiele hierfür sind der dielektrische Verlustfaktor und die Dielektrizitätszahl. Beide Parameter bleiben bei PEEKK bis zu höheren Temperaturen konstant.

Zur Herstellung von Folien aus PEEKK sind übliche Schmelzverformungsverfahren wie Pressen usw. geeignet. Besonders gut geeignet ist die Extrusion der Schmelze durch eine Schlitzdüse. Sehr wichtig ist die rasche Abkühlung der Schmelze nach Austritt aus der Düse, um die Kristallisation zu verhindern. Hierfür können verschiedene Methoden zur Abkühlung angewendet werden, wie z. B. Einleiten in ein Kühlbad, Anblasen der Schmelze oder Besprühen mit einem Kühlmedium. Technisch gut geeignet ist die Extrusion auf eine temperierte Walze (Temperatur zwischen 40 und 130 °C). Spezielle Anlegetechniken wie das elektrostatische ≫Pinning≪ mittels eines unter Hochspannung stehenden Anlegedrahtes oder Luftmesser oder Walzenbenetzung sind möglich und können helfen, einen guten Kontakt mit der Kühlwalze und Wärmeabfuhr zu gewährleisten.

PEEKK, das sich für die Herstellung amorpher Folien eignet, wird industriell hergestellt und verkauft. Erfindungsgemäße PEEKK-Folien können Zusätze wie Verarbeitungshilfsmittel, Wickelhilfsmittel (Pigmente), Stabilisatoren oder Farbpigmente in geeigneten Mengen enthalten. Auch Gleitmittel wie Calciumstearat, PTFE-Wachse oder Polydiorganosiloxane können in Mengen von 0 bis etwa 2 Gew.% in der Folie vorhanden sein, vorzugsweise von 0,1 bis 1,5 Gew.-%.

Für die Verarbeitung zu amorpher Folie über die Schmelze eignet sich PEEKK mit einem Schmelzflußindex zwischen 1 und 1000, vorzugsweise zwischen 10 und 200. Der Schmelzflußindex oder ≫MFI≪ (Melt Flow Index) wird für Polyetherketon bei 400 °C bestimmt und wird in g/10 min bei 49 N Belastung angegeben (DIN 53 735). PEEKK mit zu niedrigem Schmelzflußindex (hoher Viskosität) läßt sich nicht leicht extrudieren, während PEEKK mit zu hohem Schmelzflußindex eine ungenügende Schmelzefestigkeit besitzt.

Zur Eigenschaftsbestimmung der Folien wurden folgende Prüfmethoden angewendet:

Schmelzflußindices (MFI) wurden bei 400 °C mit einer Belastung von 49 N und einem Lochdurchmesser von 2,1 mm und 8 mm bestimmt und in g/10 min angegeben (DIN 53 735).

Dichten wurden in Übereinstimmung mit ASTM D1505-68 durch Eintauchen von Proben in Dichtegradientensäulen bestimmt. Zur Herstellung der Dichtegradientensäulen wurden entweder Gemische aus $CCl_4$/Heptan oder wässrige $ZnCl_2$-Lösungen verwendet.

Die mechanischen Eigenschaften wurden über Zugprüfung an 100 mm x 15 mm großen Folienstreifen bestimmt. Der Elastizitätsmodul wurde bei einer Zuggeschwindigkeit von 1 %/min zwischen 0,4 und 0,6 % Dehnung bestimmt. Die Reißfestigkeit und Bruchdehnung wurden mit einer Zuggeschwindigkeit von 100 %/min gemessen.

Der thermische Schrumpf wurde an 10 cm großen Quadraten bestimmt. Nach 10 Minuten in einem Umluftwärmeschrank bei der jeweils angegebenen Temperatur wurden die Proben entnommen und bei Raumtemperatur genau ausgemessen.

Die thermoplastische Verarbeitbarkeit wurde mit Zugprüfung bei erhöhter Temperatur untersucht. Folienproben einer Größe von 15 x 50 mm wurden bei einer Geschwindigkeit von 100 %/min in einer Wärmekammer gedehnt und die dabei auftretende Kraft bei dreifacher Längung (entspricht 200 % Dehnung) gemessen.

Die elektrischen Eigenschaften (dielektrischer Verlustfaktor, spezifischer Durchgangswiderstand und Dielektrizitätszahl) wurden nach VDE Norm 0303 bei 23 °C und 50 % relativer Feuchte bestimmt.

Der Glaspunkt ($T_g$) wurde als sprunghafter Anstieg der Wärmekapazität im DSC-Diagramm bestimmt.

## Beispiel 1

PEEKK mit Zusätzen von 0,1 Gew.-% Triphenylphosphat, 0,1 Gew.- % IRGAFOS 168, 0,5 Gew.-% IRGANOX 1425 (Handelsprodukte der Fa. Ciba-Geigy) als Stabilisatoren und 0,1 Gew.-% HOSTAFLON TF 9202 (einem PTFE-Wachs) als Gleitmittel mit einem Schmelzflußindex von 12 g/10 min wurde in einem Einschneckenextruder bei Temperaturen von 370 °C bis 385 °C aufgeschmolzen und durch eine Breitschlitzdüse auf eine bei 60 °C temperierte Kühlwalze extrudiert. Es wurde eine 200 μm dicke Folie erhalten, die hellgelb, zäh und transparent war. Ihre Dichte betrug 1,27 $g/cm^3$. Die mechanischen Eigenschaften waren:

Elastizitätsmodul:     2,5 GPa
Reißfestigkeit :       107 MPa
Bruchdehnung :        176 %
Der Schrumpf bei 150 °C war 0,1 % in Längs- und auch in Querrichtung.

## Beispiel 2 (Vergleichsbeispiel)

Handelsübliches PEEK (VICTREX PEEK 450 G von der Firma ICI) wurde im gleichen Extruder bei Temperaturen von 335 °C bis 385 °C durch eine Breitschlitzdüse auf die Kühlwalze extrudiert. Die erhaltenen 100 μm und 200 μm Folien waren braun, transparent und zäh. Die Dichte der Folien war 1,26 $g/cm^3$ und der $T_g$ war 145 °C. Die mechanischen Eigenschaften waren:

Elastizitätsmodul :    2,4 GPa
Reißfestigkeit :       88 MPa
Bruchdehnung :        156 %
Der Schrumpf bei 150 °C betrug 2,5 % in Maschinenrichtung und 0,7 % in Querrichtung.

## Beispiel 3

PEEKK mit Zusätzen von 0,1 Gew.-% Triphenylphosphat, 0,1 Gew.-% IRGAFOS 168 (Ciba-Geigy) und 0,1 Gew.-% HOSTAFLON TF 9202 und einem Schmelzflußindex von 14 g/10 min wurde wie in Beispiel 1

zu einer 280 μm dicken Folie verarbeitet. Die Folie war zäh, transparent und braun gefärbt. Ihre Dichte war 1,26 g/cm$^3$, und die Röntgenweitwinkelstreuung zeigte ein breites, diffuses Beugungsmaximum, was auf das völlige Fehlen von Kristallinität deutet. Die mechanischen Eigenschaften waren:

Elastizitätsmodul :    2,4 GPa
Reißfestigkeit :    78 MPa
Bruchdehnung :    147 %

## Beispiel 4

PEEKK mit einem Zusatz von 0,3 Gew.-% HOSTAFLON TF 9202 und einem Schmelzflußindex von 16 g/10 min wurde bei Temperaturen von 370 bis 400 °C auf eine Kühlwalze extrudiert. Es wurden 100 μm und 200 μm dicke Folien mit einer Dichte von 1,27 g/cm$^3$ erhalten. Sie waren braun, transparent und zäh. Der $T_g$ der Folien war 158 °C.

Die thermische Verformbarkeit dieser Folie wurde durch Zugkraftprüfung bei erhöhter Temperatur gemessen. Folienstreifen wurden mit einem Zugdehnungsprüfgerät mit Wärmekammer auf die dreifache Länge (entspricht 200 % Dehnung) gedehnt, die dabei auftretende querschnittsbezogene Kraft wurde registriert. In Abb. 1 wurden diese Kräfte in Abhängigkeit von der Meßtemperatur aufgetragen. Die PEEKK-Folie wird zunächst bei Erhöhung der Temperatur kontinuierlich weicher. Oberhalb von 170 °C, das sind etwa 12 °C über dem Glaspunkt, steigt die Kraft zur Verformung der Folie wieder an. Die Temperaturspanne, in der die querschnittsbezogene Kraft bei dreifacher Verformung unter 20 MPa lag, reicht von 145 °C bis 185 °C.

## Beispiel 5 (Vergleichsbeispiel)

Die thermische Verformbarkeit der PEEK-Folie aus Beispiel 2 wurde mit der gleichen Methode wie in Beispiel 3 gemessen. Abb. 1 zeigt ebenfalls die Ergebnisse.

Die PEEK-Folie wird zunächst analog zur PEEKK-Folie bei Temperaturerhöhung kontinuierlich weicher. Dabei ist aber die Festigkeit der PEEK-Folie bis 150 °C geringer als die der PEEKK-Folie. Gleich oberhalb des Glaspunktes des Polymeren PEEK bei 145 °C steigt die Verformungskraft wieder an. Als Folge ist die Temperaturspanne, in der die Verformungskraft für dreifache Dehnung unterhalb 20 MPa liegt, für PEEK deutlich enger als bei PEEKK.

## Beispiel 6

PEEKK mit Zusätzen von 0,2 Gew.-% IRGANOX 1222 (Ciba-Geigy), 0,1 Gew.-% IRGAFOS PEPQ (Ciba-Geigy) und 0,1 Gew.-% HOSTAFLON TF 9202 mit einem Schmelzflußindex von 17 g/10 min wurde in einem Einschneckenextruder bei Temperaturen von 370 °C bis 390 °C aufgeschmolzen und durch eine Breitschlitzdüse auf eine bei 75 °C temperierte Kühlwalze extrudiert. Es wurde eine 200 μm dicke Folie erhalten, die braun, zäh und transparent war. Ihre Dichte betrug 1,27 g/cm$^3$.

Die Wärmebeständigkeit dieser Folie wurde untersucht. Hierbei wurde die Veränderung der mechanischen Eigenschaften nach zweistündiger Lagerung in einem Wärmeschrank bei 160 °C durch Zugprüfung gemessen. Die Meßergebnisse werden in Tabelle I angegeben. Die Reißfestigkeit und Reißdehnung werden durch die Wärmebehandlung nicht verschlechtert, sondern sogar verbessert. Die Folie verformte sich nicht bei der Behandlung.

## Beispiel 7 (Vergleichsbeispiel)

Eine handelsübliche, amorphe 100 μm PEEK-Folie (LITREX K der Fa. PCD) wurde wie in Beispiel 5 über eine Zeitspanne von zwei Stunden wärmebehandelt. Während der Behandlung wurde die Folie wellig. Die Veränderung der mechanischen Eigenschaften wird in Tabelle I angegeben. Wie man erkennt, unterläuft die PEEK-Folie durch die Wärmebehandlung einer Versprödung.

**Tabelle I:**      Veränderung der mechanischen Eigenschaften von PEEKK- und PEEK-Folien durch 2stündige Wärmebehandlung bei 160 °C

|  | PEEKK Beispiel 6 | PEEK Beispiel 7 |
|---|---|---|
| verbleibende Reißfestigkeit (% vom Ausgangswert) | 116 | 65 |
| verbleibende Reißdehnung (% vom Ausgangswert) | 122 | 69 |

### Beispiel 8

Die Dimensionsstabilität von PEEKK-Folien wurde mit Schrumpfmessungen untersucht. Dazu wurden die Folien aus Beispiel 1 und 3 verwendet. Quadratische Folienstücke mit einer Kantenlänge von 10 cm wurden 10 Minuten bei verschiedenen Temperaturen in einen Umluftwärmeschrank gelegt. Anschließend wurde die Dimensionsänderung in Extrusionsrichtung gemessen.

Abb. 2 zeigt den Schrumpf-Wert der PEEKK-Folien in Abhängigkeit von der Temperatur. Man erkennt, daß der thermische Schrumpf erst oberhalb von 160 °C einsetzt.

### Beispiel 9 (Vergleichsbeispiel)

Die Dimensionsstabilität von PEEK-Folien wurde auf die gleiche Weise wie in Beispiel 8 untersucht. Hierzu wurden PEEK-Folien aus Beispiel 2 und handelsübliche PEEK-Folien (s. Beispiel 7) verwendet. Die Ergebnisse sind ebenfalls in Abb. 2 dargestellt. Der thermische Schrumpf von PEEK-Folien beginnt bereits bei viel tieferer Temperatur: bei den Folien aus Beispiel 2 bei ca. 140 °C und bei der handelsüblichen PEEK-Folie sogar noch tiefer.

### Beispiel 10 (Vergleichsbeispiel)

Aus der amorphen Folie von Beispiel 6 wurde eine kristalline PEEKK-Folie hergestellt und die mechanischen Eigenschaften dieser Folie mit denen der amorphen Folie verglichen.

Ein Teil der amorphen Folie wurde in einen Spannrahmen eingespannt und 10 Sekunden in einen Umluftwärmeschrank bei 275 °C gelegt. Durch die Wärmebehandlung kristallisierte die Folie, was sich in einem Anstieg der Dichte auf 1,29 g/cm$^3$ und Opakwerden äußerte. Messung der mechanischen Eigenschaften der amorphen und der kristallinen Folie zeigte ein eher sprödes Verhalten der kristallinen Folie:

|  | amorphe PEEKK-Folie | kristalline PEEKK-Folie |
|---|---|---|
| Dichte (g/cm$^3$) | 1,27 | 1,29 |
| Elastizitätsmodul (GPa) | 2,4 | 2,6 |
| Kraft bei 5 % Dehnung (MPa) | 72 | 82 |
| Reißfestigkeit (MPa) | 89 | 66 |
| Bruchdehnung (%) | 147 | 30 |

### Beispiel 11

Zwei Lagen amorpher PEEKK-Folie aus Beispiel 3 wurden mit einem Foliensiegelgerät der Fa. Walter Tantz (Berlin) miteinander verschweißt. (Die nötigen Einstellungen des Gerätes waren Andruckzeit "6", Arbeitstempo "6", Wärme "11", und Zeit "10".)

Kristalline PEEKK-Folie aus Beispiel 10 ließ sich bei dieser Einstellung nicht schweißen.

### Beispiel 12

PEEKK mit Zusätzen von 0,2 Gew.-% IRGANOX 1222 (Ciba-Geigy), 0,1 Gew.-% IRGAFOS PEPQ (Ciba-Geigy) und 0,1 Gew.-% HOSTAFLON TF 9202 mit einem Schmelzflußindex von 107 g/10 min wurde wie in Beispiel 1 bei Temperaturen von 330 bis 380 °C zu einer 200 μm dicken Folie verarbeitet. Die erhaltene Folie war glänzend, braun, zäh und transparent. Die mechanischen Eigenschaften waren:

Elastizitätsmodul: 2,6 GPa
Reißfestigkeit: 82 MPa
Bruchdehnung: 144 %

### Beispiel 13

PEEKK mit den gleichen Zusätzen wie in Beispiel 12 und einem Schmelzflußindex von 45 g/10 min wurde wie in Beispiel 10 zu Folie extrudiert. Die 100 μm dicke Folie war braun, zäh und transparent. Die mechanischen Eigenschaften waren:

Elastizitätsmodul: 2,6 GPa
Reißfestigkeit: 119 MPa
Bruchdehnung : 194 %

### Beispiel 14

In einer auf 300 °C beheizten Plattenpresse wurden 2 Stücke PEEKK-Folie aus Beispiel 3 mit den Abmessungen 20 x 20 cm über eine Zeitspanne von 5 Minuten mit einem Druck von 50 kp aufeinandergepreßt. Die Folienstücke klebten danach zusammen.

### Beispiel 15

Die PEEKK-Folie von Beispiel 1 wurde beidseitig mit Silber bedampft und die elektrischen Eigenschaften bei 25 °C, 100 °C und 150 °C bestimmt (s. Tabelle II).

### Beispiel 16 (Vergleichsbeispiel)

Auf die gleiche Weise wie in Beispiel 15 wurden die elektrischen Eigenschaften der PEEK-Folie aus Beispiel 2 bestimmt. Die Meßergebnisse sind auch in Tabelle II angegeben. Es erweist sich, daß die Konstanz des dielektrischen Verlustfaktors über den Temperaturbereich 25 bis 150 °C bei der PEEK-Folie schlechter ist als bei der PEEKK-Folie.

**Tabelle II:**  Elektrische Eigenschaften von PEEKK- und PEEK-Folien

|  |  | PEEKK (Beisp. 15) | PEEK (Beisp. 16) |
|---|---|---|---|
|  | Temp. °C |  |  |
| Dielektrischer | 25 | $1 \times 10^{-3}$ | $2 \times 10^{-3}$ |
| Verlustfaktor | 100 | $1 \times 10^{-3}$ | $1 \times 10^{-3}$ |
|  | 150 | $1 \times 10^{-3}$ | $9 \times 10^{-3}$ |
| spez. Durchgangs- | 25 | $10^{17}$ | $10^{17}$ |
| widerstand ($\Omega \times cm$) | 100 | $10^{16}$ | $10^{16}$ |
|  | 150 | $10^{16}$ | $10^{16}$ |
| Dielektrizitäts- | 25 | 3,66 | 3,48 |
| zahl | 100 | 3,66 | 3,48 |
|  | 150 | 3,65 | 3,45 |

**Beispiel 17**

PEEKK mit Zusätzen von 0,1 Gew.-% Triphenylphosphat, 0,1 Gew.-% IRGAFOS 168 (Ciba-Geigy) und 0,1 Gew.-% HOSTAFLON TF 9202 mit einem Schmelzflußindex von 16 g/10 min wurde wie in Beispiel 1 zu einer 200 $\mu$m dicken, amorphen Folie verarbeitet. Die mechanischen Eigenschaften wurden gleich nach der Herstellung und dann wieder nach 18monatiger Lagerung gemessen. Die Zähigkeit der Folie ist in dieser Zeit nicht abgefallen, sondern geringfügig angestiegen:

|  | frisch extru-diert | nach 18 Monaten |
|---|---|---|
| Elastizitätsmodul (GPa) | 2,4 | 2,6 |
| Reißfestigkeit (MPa) | 90 | 100 |
| Bruchdehnung (%) | 160 | 164 |

**Beispiel 18**

PEEKK mit einem Schmelzflußindex von 11 g/10 min wurde in einem Einschneckenextruder bei Temperaturen von 370 °C bis 385 °C aufgeschmolzen und durch eine Breitschlitzdüse auf eine auf 70 °C temperierte Kühlwalze mit elektrostatischer Anlegung extrudiert. Es wurde eine 500 $\mu$m dicke Folie hergestellt, die gelb und transparent war und eine Dichte von 1,27 g/cm$^3$ hatte.

**Beispiel 19**

PEEKK-Folien aus Beispiel 1 (220 $\mu$m) und 18 (500 $\mu$m) wurden an einem Vakuumtiefziehgerät zu konischen Bechern geformt. Die dazu verwendete Form hatte folgende Maße: Tiefe 40 mm, oberer Durchmesser 89 mm, unterer Durchmesser 73 mm.

Die Folien wurden in 180 x 180 mm große Quadrate geschnitten, in das Gerät eingespannt und mit einer Infrarotheizung auf 160 °C erwärmt (Heizzeit für 200 μm: 3 bis 4 s, für 500 μm: 10 bis 20 s) und dann mit Vakuum in die Form gezogen. Dabei wurde die Folie am Becherboden um das 1,75fache in jeder Richtung gestreckt.

## Beispiel 20

Ein tiefgezogener Becher aus Beispiel 19 (aus dicker Folie) wurde mit Wasser gefüllt und auf eine Laborkochplatte gestellt. Der Becher wurde erwärmt (Einstellung der Kochplatte 300 °C) bis das Wasser kochte. Der Becher verformte sich dabei nicht.

## Beispiel 21

PEEKK mit einem schmelzflußindex von 24 g/10 min und Zusätzen von 0,1 Gew.-% IRGAFOS PEPQ, 0,2 Gew.-% IRGANOX 1222 (Ciba Geigy) und 0,1 Gew.-% Octaphenylcyclotetrasiloxan wurde wie in Beispiel 1 zu einer amorphen Folie extrudiert. Die Dichte der Folie betrug 1,27 g/cm³. Die Folie war braungefärbt und transparent. Die mechanischen Eigenschaften waren:

Elastizitätsmodul: 2,6 GPa
Reißfestigkeit: 111 MPa
Bruchdehnung: 180 %

## Beispiel 22

PEEKK mit einem Schmelzflußindex von 13 g/10 min und Zusätzen von 0,1 Gew.-% IRGAFOS PEPQ, 0,2 Gew.-% IRGANOX 1222 und 0,1 Gew.- % Calciumstearat wurde wie in Beispiel 1 zu einer 100 μm dicken amorphen Folie extrudiert. Die Folie besaß eine Gelbfärbung und war transparent. Die Messung ihrer mechanischen Eigenschaften ergab folgende Werte:

Elastizitätsmodul: 2,6 GPa
Reißfestigkeit: 140 MPa
Bruchdehnung: 220 %

## Patentansprüche

1.  Folie aus thermoplastischem, vollaromatischem Polyetherketon, dadurch gekennzeichnet, daß sie amorph ist und daß sie im wesentlichen aus dem Polymeren PEEKK besteht, das aus folgendem ständig wiederkehrenden Baustein aufgebaut ist:

    -[-Ph-O-Ph-O-Ph-CO-Ph-CO-]-,

    wobei die Gruppe Ph eine para-Phenylengruppe bedeuten soll.

2.  Folie nach Anspruch 1, dadurch gekennzeichnet, daß ihre Dichte $\leq$ 1,28 g/cm³ ist.

3.  Folie nach Anspruch 1 oder 2, dadurch gekennzeichnet, daß das Polyetherketon einen Schmelzflußindex im Bereich von 1,0 bis 1000 g/10 min aufweist.

4.  Folie nach einem der Ansprüche 1 bis 3, dadurch gekennzeichnet, daß sie weitere Zusätze wie Verarbeitungshilfsmittel, Wickelhilfsmittel (Pigmente), Stabilisatoren oder Farbpigmente in geeigneten Mengen enthält.

5.  Folie nach einem der Ansprüche 1 bis 4, dadurch gekennzeichnet, daß sie Gleitmittel wie Calciumstearat, PTFE-Wachse oder Polydiorganosiloxane in Mengen von 0 bis etwa 2 Gew.-%, vorzugsweise von 0,1 bis 1,5 Gew.- % enthält.

6.  Verwendung einer Folie nach einem der Ansprüche 1 bis 5 zur Herstellung von amorphen Formkörpern.

7. Verwendung einer Folie nach einem der Ansprüche 1 bis 5 zur Herstellung von kristallinen Formkörpern.

8. Verwendung einer Folie nach einem der Ansprüche 1 bis 5 als elektrisches Isolationsmaterial.

FIG. 1

PEEKK- und PEEK - FOLIEN
Schrumpfwerte     [%]  (MD)

| PEEKK 200 µm | PEEKK 100 µm | PEEK 200 µm | PEEK 100 µm | PEEK 100 µm |
|:---:|:---:|:---:|:---:|:---:|
| Beisp.1 | Beisp.4 | Beisp.2 | Beisp.2 | Beisp.7 |

FIG. 2

EP 0 452 830 A2